# EUROPÄISCHE PATENTANMELDUNG

(11) **EP 1 411 335 A1**
(43) Veröffentlichungstag der Anmeldung: **21.04.2004**
(21) Anmeldenummer: 03022716.9
(22) Anmeldetag: 09.10.2003
(51) Int. Cl.: G01L 5/16

(54) **Mehrkomponenten-Aufnehmer und damit bestückte Messplattform**

(30) Priorität: 15.10.2002 DE 10247972
(71) Anmelder: GTM GASSMANN THEISS MESSTECHNIK GMBH, 64404 Bickenbach (DE)
(72) Erfinder: Gassmann, Helmut, 64342 Seeheim-Jugenheim (DE); Schulder, Gerhard, 64665 Alsbach-Hähnlein (DE); Schwind, Daniel, 55234 Wendelsheim (DE)
(74) Vertreter: Katscher, Helmut, Dipl.-Ing.

(57) **Zusammenfassung**

Eine Vorrichtung zur Erfassung von Kräften und/oder Momenten mit mindestens einem Mehrkomponenten-Aufnehmer (1) besteht aus einem sich zwischen zwei Krafteinleitungsflanschen (4, 5) in Richtung der Aufnehmer-Längsachse erstreckenden Verformungssteg (2), der an seinen Außenflächen Dehnungsmessstreifen (3) trägt, wobei einer (4) der beiden Krafteinleitungsflansche (4, 5) mit einem äußeren Anschlussflansch (9) über ein Biegegelenk (10) verbunden ist, dessen Gelenkachse (11) sich rechtwinklig zur Ebene des Verformungsstegs (2) erstreckt. Mehrere Mehrkomponenten-Aufnehmer (1) sind zwischen dem Grundkörper und der Aufnahme-Plattform einer Messplattform angeordnet, wobei die Ebenen der Verformungsstege (2) nicht-parallel zueinander gerichtet sind. Die üblicherweise drei Mehrkomponenten-Aufnehmer (1) sind so angeordnet, dass die Ebenen der Verbindungsstege (2) tangential zu einem gemeinsamen Kreis gerichtet sind. Die Mehrkomponenten-Aufnehmer (1) sind Zweikomponenten-Kraftaufnehmer.

## Beschreibung

Die Erfindung betrifft einen Mehrkomponenten-Aufnehmer mit einem sich zwischen zwei Krafteinleitungsflanschen in Richtung der Aufnehmer-Längsachse erstreckenden Verformungssteg, der an seinen Außenflächen Dehnungsmessstreifen trägt.

Derartige Mehrkomponenten-Aufnehmer sind aus der Praxis bekannt. Sie dienen dazu, Kraftkomponenten, die in Richtung der Aufnehmerlängsachse und rechtwinklig dazu in der Ebene des Verformungsstegs verlaufen, und/oder Momente zu erfassen. Der Aufnehmer ist infolge der Biegsamkeit seines Verformungsstegs jedoch von Kraftkomponenten entkoppelt, die senkrecht zur Ebene des Verformungsstegs gerichtet sind.

Wenn die beiden an den Verbindungssteg anschließenden Krafteinleitungsflansche biegesteif an den jeweils benachbarten Bauteilen angebracht sind, ist der Mehrkomponenten-Aufnehmer, beispielsweise ein Zweikomponenten-Kraftaufnehmer, zwar von Biegemomenten um eine in der Ebene des Verformungsstegs liegende Biegeachse entkoppelt. Jedoch haben Biegemomente um eine senkrecht zur Ebene des Verformungsstegs verlaufende Biegeachse einen störenden Einfluss auf das Messergebnis.

Aufgabe der Erfindung ist es daher, einen Mehrkomponenten-Aufnehmer so auszubilden, dass er von allen störenden Biegemomenten entkoppelt ist.

Diese Aufgabe wird erfindungsgemäß gelöst durch eine Vorrichtung zur Erfassung von Kräften und/oder Momenten mit mindestens einem Mehrkomponenten-Aufnehmer bestehend aus einem sich zwischen zwei Krafteinleitungsflanschen in Richtung der Aufnehmer-Längsachse erstreckenden Verformungssteg, der an seinen Außenflächen Dehnungsmessstreifen trägt, wobei einer der beiden Krafteinleitungsflansche mit einem äußeren Anschlussflansch über ein Biegegelenk verbunden ist, dessen Gelenkachse sich rechtwinklig zur Ebene des Verformungsstegs erstreckt.

Dieses Biegegelenk verhindert die Einleitung von störenden Biegemomenten um eine sich senkrecht zur Ebene des Verformungsstegs erstreckende Biegeachse. Damit ist der Mehrkomponenten-Aufnehmer von allen störenden Biegemomenten weitestgehend entkoppelt.

Das hierfür erforderliche zusätzliche Biegegelenk lässt sich in platzsparender Weise am Mehrkomponenten-Aufnehmer ausführen. Besonders vorteilhaft ist es, wenn der gesamte Mehrkomponenten-Aufnehmer einschließlich des zusätzlichen Biegegelenks und des äußeren Anschlussflansches gemäß einer Ausgestaltung des Erfindungsgedankens einstückig ausgeführt wird.

In Ausgestaltung des Erfindungsgedankens wird eine Vorrichtung vorgeschlagen, bei welcher mehrere Mehrkomponenten-Aufnehmer gemäß den Patentansprüchen 1 oder 2 zwischen einem Grundkörper und einer Aufnahme-Plattform einer Messplattform verbunden angeordnet sind.

Durch den Einsatz von mehreren, vorzugsweise drei erfindungsgemäßen Mehrkomponenten-Aufnehmern bei einer in ihrem grundsätzlichen Aufbau bekannten Messplattform ergibt sich der besondere Vorteil, dass eine Sechskomponenten-Messplattform geschaffen wird, bei der Verspannungen, die durch die biegesteife Anbringung der Mehrkomponenten-Aufnehmer am Grundkörper und an der Aufnahme-Plattform entstehen könnten, ohne störenden Einfluss auf das Messergebnis bleiben, weil durch die besondere Ausführung der Mehrkomponenten-Aufnehmer verhindert wird, dass störende Momente auf den Aufnehmer übertragen werden. Solche störenden Momente könnten insbesondere bei elastischen Verformungen bei Belastung der Plattform und dadurch entstehen, dass die Verbindungsflächen der einzelnen Aufnehmer infolge von Fertigungstoleranzen und/oder von im Betrieb auftretenden Wärmedehnungen von der vorgegebenen genauen Solllage abweichen. Die sich daraus ergebenden Verspannungen bzw. Biegemomente bleiben jedoch ohne störenden Einfluss auf die Aufnehmer.

Weitere vorteilhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind.

Es zeigt:
Fig. 1 in räumlicher Darstellungsweise einen Zweikomponenten-Kraftaufnehmer,
Fig. 2 den Zweikomponenten-Kraftaufnehmer nach Fig. 1 in einer Seitenansicht,
Fig. 3 einen Schnitt längs der Linie III-III in Fig. 2,
Fig. 4 in räumlicher Darstellungsweise und teilweise ausgeschnitten eine Messplattform, die mit Zweikomponenten-Kraftaufnehmern gemäß den Fig. 1-3 bestückt ist,
Fig. 5 eine Ansicht in Richtung des Pfeiles V in Fig. 1 und
Fig. 6 einen Schnitt längs der Linie VI-VI in Fig. 5.

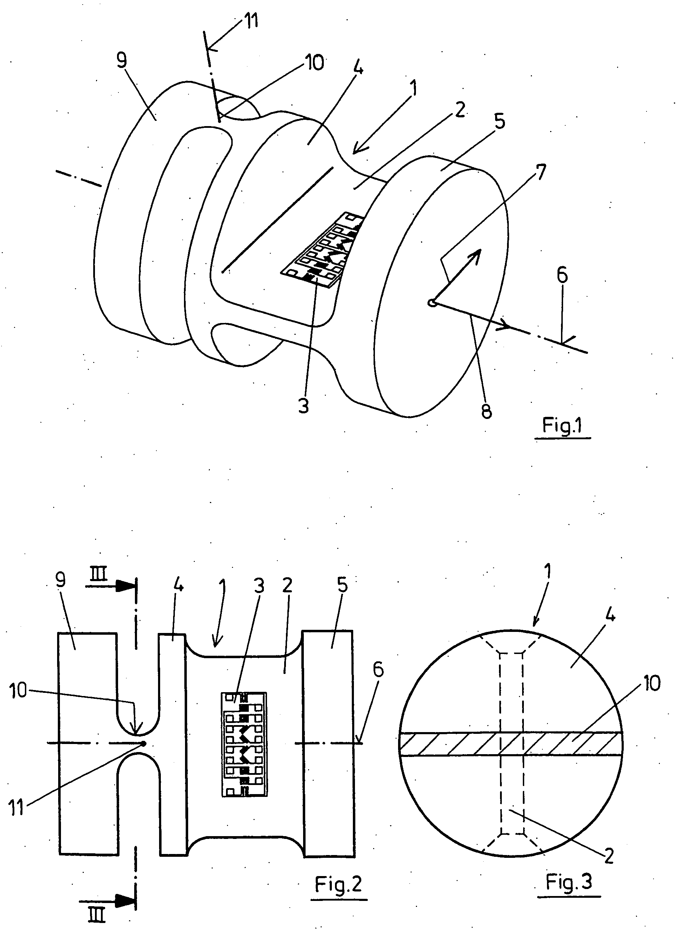

Der in den Fig. 1-3 als Beispiel eines Mehrkomponenten-Aufnehmers dargestellte Zweikomponenten-Kraftaufnehmer 1 ist einstückig aus Metall, vorzugsweise Stahl, ausgeführt. Ein Verformungssteg 2, der an seinen beiden Außenflächen Dehnungsmessstreifen 3 trägt, erstreckt sich zwischen einem Krafteinleitungsflansch 4 und einem äußeren Krafteinleitungsflansch 5. Der Verformungssteg 2 erstreckt sich in Richtung der Aufnehmer-Längsachse 6, die er enthält. Die am Verformungssteg 2 angebrachten Dehnungsmessstreifen, die in einer (nicht dargestellten) Auswerte-Brückenschaltung zusammengeschaltet sind, erfassen die in Fig. 1 mit Pfeilen 7 und 8 angedeuteten Kraftkomponenten, die in der Ebene des Verformungsstegs 2 verlaufen.

Der Krafteinleitungsflansch 4 ist mit einem äußeren Anschlussflansch 9 über ein Biegegelenk 10 verbunden, dessen in Fig. 1 nur angedeutete Gelenkachse 11 sich rechtwinklig zur Ebene des Verformungsstegs 2 erstreckt.

Durch dieses Biegegelenk 10 wird der Zweikomponenten-Kraftaufnehmer 1 von störenden Biegemomenten um die Gelenkachse 11 entkoppelt. Da eine Entkoppelung von störenden Biegemomenten um eine senkrecht hierzu verlaufende Biegeachse, die in der Ebene des Verbindungsstegs 2 liegt, bereits durch die Biegsamkeit des Verformungsstegs 2 erfolgt, ist der Verformungssteg 2 des Zweikomponenten-Kraftaufnehmers 1 von allen störenden Momenteinflüssen entkoppelt. Solche störenden Momenteinflüsse könnten insbesondere erzeugt werden, wenn die Stirnflächen des äußeren Krafteinleitungsflansches 5 und des äußeren Anschlussflansches 9 durch elastische Verformung der jeweils benachbarten Bauteile relativ zueinander gekippt oder verlagert werden.

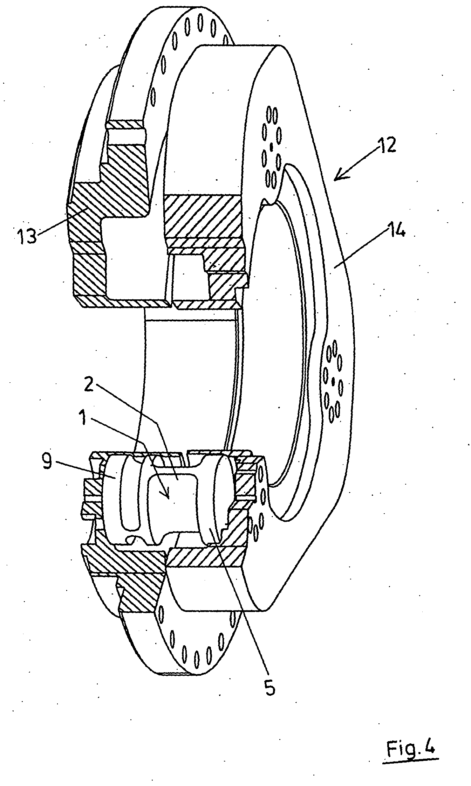

In den Fig. 4-6 ist eine Messplattform 12 dargestellt, die mit drei Zweikomponenten-Kraftaufnehmern 1 bestückt ist. Die Messplattform 12 bildet beispielsweise einen 3-D-Radlastsensor für einen Prüfstand. Mit der Messplattform 12 werden die sechs Kraft- bzw. Moment-Komponenten erfasst, die auf den Prüfling durch die Belastungseinrichtungen des Prüfstandes ausgeübt werden.

Ein im wesentlichen ringförmiger Grundkörper 13 der Messplattform 12 ist über die drei Zweikomponenten-Kraftaufnehmer 1 mit einer ebenfalls im wesentlichen ringförmigen Aufnahme-Plattform 14 verbunden. Jeweils der äußere Anschlussflansch 9 jedes Zweikomponenten-Kraftaufnehmers 1 ist mit dem Grundkörper 13 verschraubt, während jeweils der äußere Krafteinleitungsflansch 5 mit der den Prüfling tragenden Aufnahme-Plattform 14 verschraubt ist.

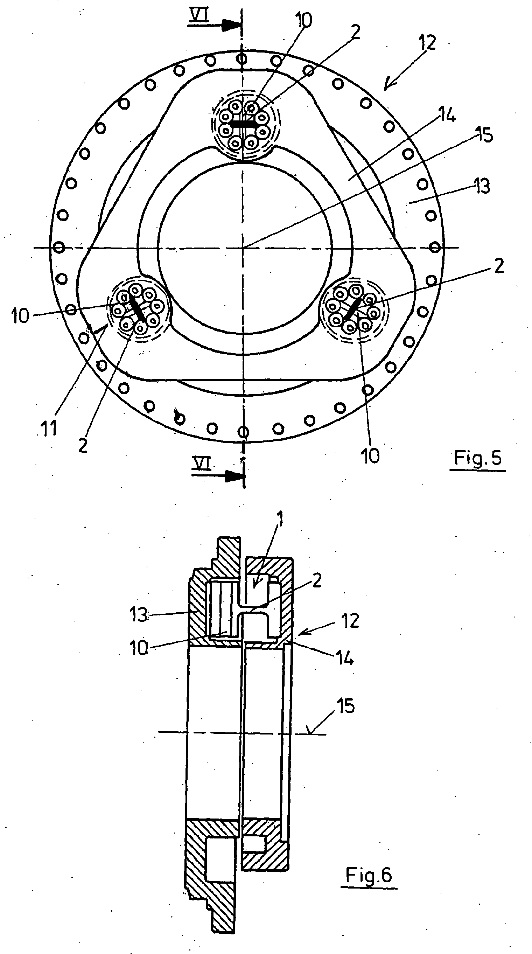

Die Zweikomponenten-Kraftaufnehmer 1 sind dabei so ausgerichtet, dass die Ebenen ihrer Verformungsstege 2 nicht-parallel zueinander gerichtet sind. Gemäß der besonders günstigen, dargestellten Ausführungsform sind die Zweikomponenten-Kraftaufnehmer so angeordnet, dass die Ebenen der Verformungsstege 2 tangential zu einem gemeinsamen Kreis gerichtet sind. Diese Ausrichtung der Verformungsstege 2 ist in Fig. 5 dadurch deutlich gemacht, dass diese Verformungsstege 2 dort jeweils geschwärzt dargestellt sind. Wie man aus Fig. 5 erkennt, erstrecken sich die Gelenkachsen 11 der Biegegelenke 10 jeweils radial zur Achse 15 der drehsymmetrisch ausgeführten Messplattform 12.

Die in den Fig. 4-6 dargestellte Messplattform 12 kann - wie beschrieben - zur Messung der Kräfte und Momente am Achszapfen einer Kraftfahrzeugs eingesetzt werden. Es ist aber auch möglich, die beschriebene Messplattform 12 für ein sog. Messrad zu verwenden, mit dem im Betrieb eines Kraftfahrzeugs die vom Fahrzeugrad übertragenen Kräfte und Momente erfasst werden.

## Patentansprüche

1. Vorrichtung zur Erfassung von Kräften und/oder Momenten mit mindestens einem Mehrkomponenten-Aufnehmer (1) bestehend aus einem sich zwischen zwei Krafteinleitungsflanschen (4, 5) in Richtung der Aufnehmer-Längsachse erstreckenden Verformungssteg (2), der an seinen Außenflächen Dehnungsmessstreifen (3) trägt, wobei einer (4) der beiden Krafteinleitungsflansche (4, 5) mit einem äußeren Anschlussflansch (9) über ein Biegegelenk (10) verbunden ist, dessen Gelenkachse (11) sich rechtwinklig zur Ebene des Verformungsstegs (2) erstreckt.

2. Vorrichtung nach Anspruch 1, **dadurch gekennzeichnet, dass** der Mehrkomponenten-Aufnehmer (1) einstückig ausgeführt ist.

3. Vorrichtung nach Anspruch 1 oder 2, **dadurch gekennzeichnet, dass** mehrere Mehrkomponenten-Aufnehmer (1) zwischen einem Grundkörper (13) und einer Aufnahme-Plattform (14) einer Messplattform (12) angeordnet sind.

4. Vorrichtung nach Anspruch 3, **dadurch gekennzeichnet, dass** die Mehrkomponenten-Aufnehmer (1) so angeordnet sind, dass die Ebenen der Verformungsstege (2) nicht-parallel zueinander gerichtet sind.

5. Vorrichtung nach Anspruch 4, **dadurch gekennzeichnet, dass** die Mehrkomponenten-Aufnehmer (1) so angeordnet sind, dass die Ebenen der Verbindungsstege (2) tangential zu einem gemeinsamen Kreis gerichtet sind.

6. Vorrichtung nach einem der Ansprüche 3-5, **dadurch gekennzeichnet, dass** drei Mehrkomponenten-Aufnehmer (1) vorgesehen sind.

7. Vorrichtung nach einem der Ansprüche 3-6, **dadurch gekennzeichnet, dass** die Mehrkomponenten-Aufnehmer (1) Zweikomponenten-Kraftaufnehmer sind.
